# EUROPEAN PATENT SPECIFICATION

(11) **EP 1 330 901 B1**
(45) Date of publication and mention of the grant of the patent: **28.09.2005**
(21) Application number: 01980666.0
(22) Date of filing: 31.10.2001
(51) Int. Cl.: H04L 12/64

(54) **TELECOMMUNICATIONS SYSTEMS**
TELEKOMMUNIKATIONSSYSTEM
SYSTEME DE TELECOMMUNICATION

(30) Priority: 31.10.2000 EP 00309597
(43) Date of publication of application: 30.07.2003
(73) Proprietor: BRITISH TELECOMMUNICATIONS public limited company, London EC1A 7AJ (GB)
(72) Inventor: MCGOVERN, David, Brentwood, Essex CM15 8JS (GB); ROSE, Ian, Gordon, Stowmarket, Suffolk IP14 6QB (GB); FIDLER, Andrew, John, Hornby, Ipswich, Suffolk IP5 3UB (GB); HERNANDEZ, Guillem, Ipswich, Suffolk IP4 5UX (GB); TREGUNNA, Adrian, Penzance, Cornwall TR18 2AX (GB)
(74) Representative: Lloyd, Barry George William
(86) International application number: PCT/GB2001/004829
(87) International publication number: WO 2002/037775

(56) References cited:
- EP-A- 0 973 343
- WO-A-99/12329
- DE-A- 19 737 855
- HOUGHTON T F ET AL: "A PACKET TELEPHONY GATEWAY FOR PUBLIC NETWORK OPERATORS" ISS. WORLD TELECOMMUNICATIONS CONGRESS. (INTERNATIONAL SWITCHING SYMPOSIUM),CA,TORONTO, PINNACLE GROUP, 21 September 1997 (1997-09-21), pages 35-44, XP000704453
- SUGARIS A ET AL: "BROADBAND ACCESS SYSTEMS USING SATELLITE NETWORKS" PROCEEDINGS OF THE INTERNATIONAL CONFERENCE ON COMMUNICATION TECHNOLOGY, 1998, XP000905293

## Description

This invention relates to telecommunications networks, and more particularly to the provision of broadband telecommunications services, such as might be used for internet and similar services.

Today, there is an increasing demand for broadband services to support a wide range of information services to end users, including for example email, internet and intranet access, file transfer and audio and video programme distribution. One solution to this has been the development of asymmetrical digital subscriber line (ADSL) services by which relatively high bit rates can be provided in the downstream direction (e.g. from an information provider such as an internet service provider (ISP) or corporate host, to their end users) over copper pair telephone lines. (ADSL and variants of it such as VDSL (Very high speed ADSL) are commonly referred to as "xDSL"). However, these suffer several disadvantages. In particular, the use of copper pair lines has limited distance reach, and the costs associated with the trunk and access distribution networks can cause them to be uneconomic for coverage of some parts of a desired service area.

As illustrated (see M. Fitch and A. Fidler, "An overview of satellite access networks", *BT Technology Journal*, Vol. 18, No. 3 (July 2000), pp. 94 -101) satellite radio links can be used in an arrangement where signals from an ISP are transmitted in digital video broadcast (DVB) format via a satellite link to a user's terminal, whilst traffic in the opposite direction is sent via the public switched telephone network.

DE-A-197 37 855 shows a telecommunications system in which user terminals are connected via access networks to internet service provider stations (ISP's) and thence to the internet. Also connected to the internet are data sources and a selection device which serves to select real-time data which it transmits via a satellite link the ISPs, which forward the data to the user terminals via the access network. In the event of failure of the satellite link, the selection device sends the data via the internet instead.

According to the present invention there is provided a telecommunications access system comprising:
an interface to a telecommunications network;
a branch device;
first transmission means for conveying data in both directions between the interface and the branch device;
second transmission means for conveying data in both directions between the branch device and a user terminal; and
third transmission means for conveying data from the branch device to the user terminal;
wherein the branch device is arranged in operation to examine items of data received from the interface and, selectively in dependence on information contained in an item of data, to route it via the second or via the third transmission means; and wherein the third transmission means has a higher capacity than the second transmission means and is arranged to deliver data to the premises at which the user terminal is located over a path arriving at the sound premises independently of a path employed by the second transmission means.

Other aspects of the invention are set out in the claims.

Some embodiments of the invention will now be described, by way of example, with reference to the accompanying drawings, in which
Figure 1 is a block diagram of a telecommunications system according to one embodiment of the present invention;
Figure 2 is a block diagram of a telecommunications system according to a second embodiment;
Figure 3 illustrates a modified satellite link arrangement which could be used in either Figure 1 or Figure 2.

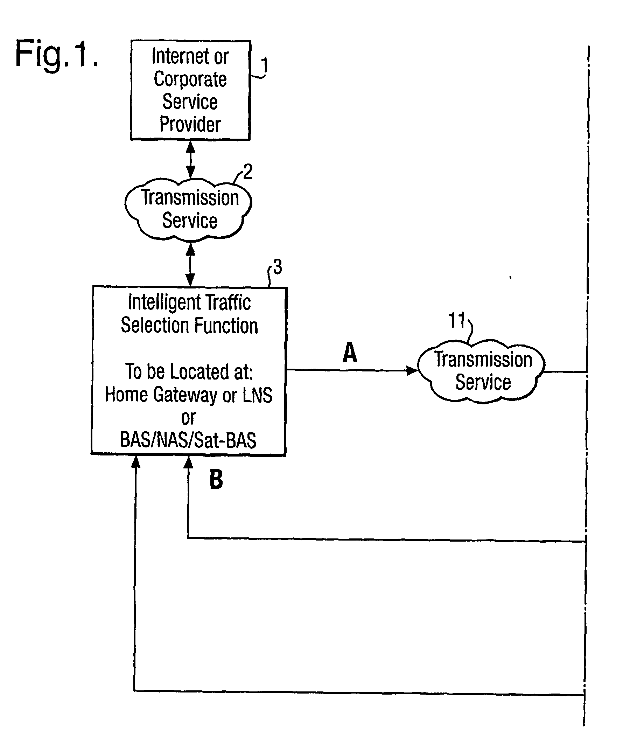

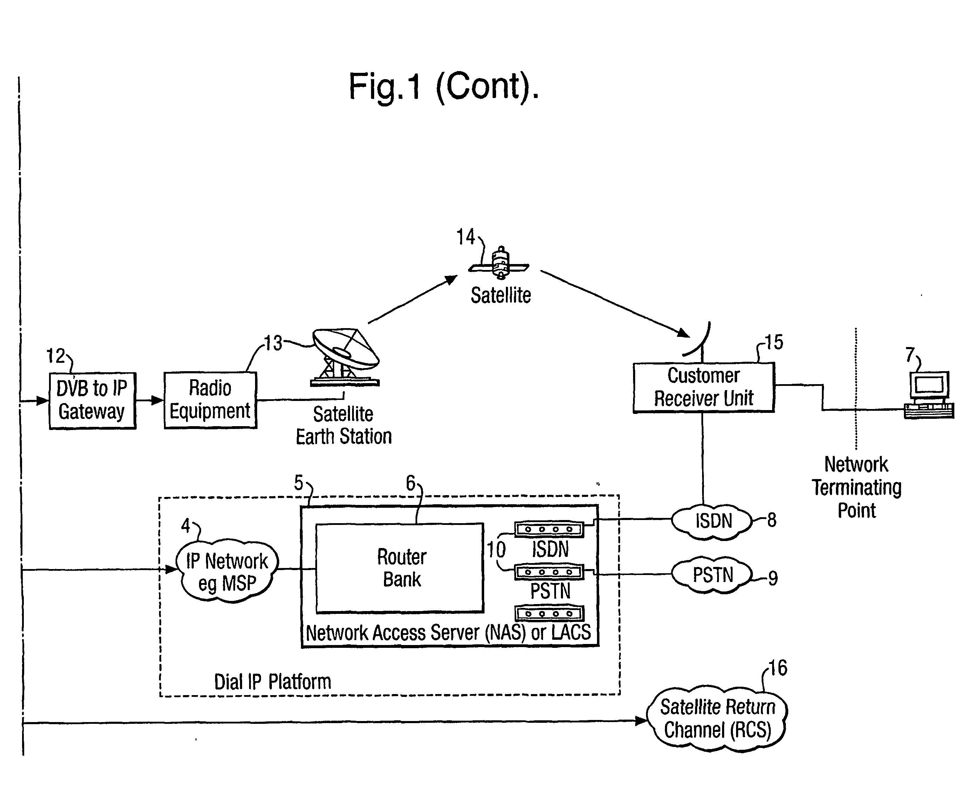

Figure 1 shows a first version of the invention where a network server 1, forming an interface to the internet (not shown), operated for example by an internet service provider or corporate intranet service is connected by a transmission link 2 of any suitable type to a router 3 (also known as a home gateway or L2TP server). This is connected in tum via an internet protocol (IP) network 4 (such as a multi-service platform) to a network access server or local access concentrator (LAC) 5. User terminals 7 are connected to this, via dial-up connections through the ISDN (Integrated Services Digital Network) 8, or PSTN (Public Switched Telephone Network) 9 and modems 10, connected to the LAC 5.

It should be understood that each server computer 1 has its own home gateway 3, though there may, and in practice generally would, be a number of servers and gateways connected to the network 4.

As described so far, this arrangement is, of course, conventional. However the gateway 3 is also connected via a transmission link 11 to a IP-to-DVB gateway 12 (for conversion to Digital Video Broadcast format) and thence to a satellite ground station transmitter 13. Signals from the transmitter are relayed by a transponder in a satellite 14 to receiver units 15 which form part of the user terminals 7. However, other types of radio link may also be used for this purpose.

An important feature of the arrangement shown in Figure 1 is that it uses, for conveying traffic from the ISP's server 1 to the user terminal 7, *both* a broadband *path A* via the satellite link *and* a narrowband path *B* via the PSTN. The upstream connection in the opposite direction is via the PSTN path *B* only. Consequently, additional functionality is required of the device 3, in that it has to examine the downstream traffic in order to decide whether it is to be sent via the satellite link (A) or via the terrestrial return channel (B).

At this point it should be appreciated (as will be discussed in more detail later) that although the actual data that is exchanged between the server 1 and the user terminal 7 consists (aside from set-up signalling) of IP packets, the actual transmission path between the server and terminal is simply a transparent connection, using a tunnelling protocol for conveying the data.

Therefore the router 3 of Figure 1 contains also arrangements for recognising patterns in the packets that are passing through it, to the extent necessary for this function.

The actual decision as to which data are to be sent over which path is made on the basis of prevailing network conditions and/or, information inserted into the data by the server 1 prescribing which path should be followed. Thus, selection criteria may include
- capacity available in the respective downstream and return links;
- UDP port numbers identified in the packet header;
- multicast/unicast identifiers in the IP header; and
- information contained in higher level protocol structures to indicate specific QoS, or application-related parameters.

This functionality may be based on the application of standard or proprietary routing protocols, e.g. MPLS, DiffServ, IntServ, RSVP, Layer 4 switching, policy based routing, conditional access routing, QOS/bandwidth management features etc.

Of course, this process requires that the relevant port numbers, identifiers or the like have been inserted into the data already. Normally this function would be performed by the server 1, depending on the type of data. For example, data forming part of the transmission of a large file would be a clear candidate to be marked to travel via satellite, whereas one would prefer time-critical data for which the quarter-second or so delay inherent in links via geostationary satellites would be significant, to travel via the terrestrial path. Some types of computer games, for example, fall into this category. Another possibility is to send an initial portion of a file or document on link *B* and the remainder on link *A.*

Thus it will be seen that one is selecting, at a suitable point in the network between the information providers network server and the local access concentrator, traffic to be forwarded to the end user via the high-speed, broadcast-capable satellite link, and traffic to be forwarded to the end user via the low-delay terrestrial link. Figure 1 shows one possible point in an example network where this decision process could take place.

Figure 1 also shows at 16 the possibility of the use of a satellite return channel, to illustrate the possibility that the upstream link may also make use of satellite transmission, and indeed that further users may use satellite links exclusively, coexisting on the same system as users using the mixed satellite/terrestrial service just described.

It will be understood that the transponder 14 will in practice carry traffic for more than one user terminal 7. Thus, the gateway 12 will include in the DVB frame structure identifiers indicating which user the data is intended for, and the receiver 15 will examine the received frames so as to extract those which are addressed to the particular user 7.

With a view to achieving the seamless connection of the satellite downstream and upstream access network to a small number of nodes in the terrestrial broadband network, in order to make common use of the broadband infrastructure, for example the core network, the connection to information providers, proxy servers, cache farms and the service surround, a modified version will now be described , using a dedicated Satellite Broadband Access Server (BAS) in an example network.

In Figure 1 the intelligent routing process has been identified as function of a network server or router located at a point in the network which connects the information provider with the distribution network. It may take several forms (both hardware and software) depending on network topology, and for example may (as in Figure 1) be a Home Gateway associated with a particular information provider, a L2TP (or equivalent protocol) Network Server, a Broadband Access Server supporting access to the entire network or a hybrid combination of these options.

Although the system of Figure 1 is highly satisfactory, it does not necessarily make the best use of available network resources.

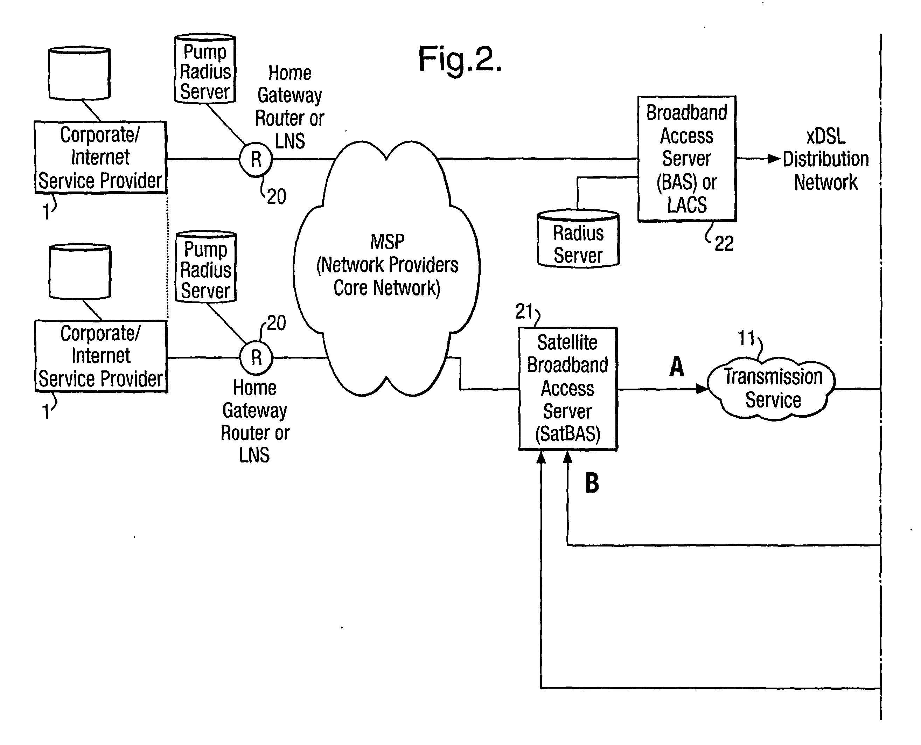

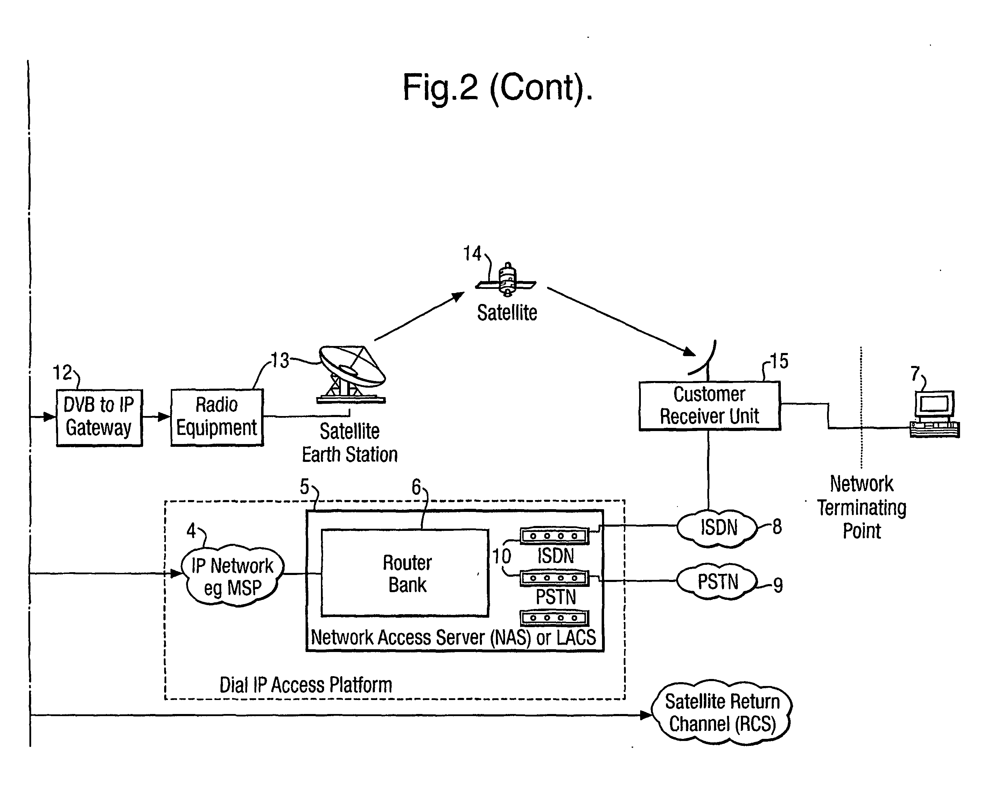

Thus, Figure 2 shows the second embodiment of the invention, using a small number of local access servers or concentrators to seamlessly connect the satellite distribution network to the core broadband infrastructure. This may take several forms (both hardware and software) depending on network topology, and for example may be a modified local access concentrator (LAC), broadband access server (BAS), L2TP network server (home gateway), standard router or a hybrid a combination of this list.

More specifically, Figure 2 again has the servers 1, the same terrestrial path *B* with access network components 4 to 6 and 8 to 10, the path *A* with components 11 to 15, and the user terminals 7. Again, each server has a router 20 analogous to the router 3 of Figure 1 except that these routers are conventional as they are no longer the point at which the satellite link "breaks in" to the terrestrial path. Rather, the routers 20 are connected via a broadband telecommunications network to a satellite broadband access server 21, which is connected to the two paths *A, B* and routes traffic over one or the other in the manner described earlier. A broadband access server 22, delivering service via an ADSL (or more generally, xDSL) distribution network is also shown, to illustrate the fact that this arrangement offers the flexibility of mixing different modes of delivery, so that one can extend economic coverage for a broadband service to the whole of a desired market area by using, for some parts of the coverage area, wholly terrestrial links, and for others terrestrial transmission for the upstream traffic from end users, and a combination of terrestrial and satellite transmission for the downstream traffic to end users. In conventional systems, Broadband Access Servers (BAS) and Network Access Servers (NAS) handle the connection between the distribution network and core network in the terrestrial ADSL and Dial IP access scenarios respectively. Their main functionality is to tunnel the end-users signalling and data traffic (e.g. point-to-point protocol (PPP) session) across the network operators core network to the appropriate layer 2 tunnelling protocol (L2TP) network server (LNS) or home gateway (HG) (the generic term "Home Gateway" refers both to a stand-alone home gateway router and home gateway farms with multiple gateways) associated with the information provider. In both these scenarios an end to end bi-directional tunnel is created between the end users equipment and the LNS or HG.

In the system of Figure 2 we need to break out this tunnel at an appropriate point in the network between the LNS/HG and the LAC and redirect the downstream traffic through the satellite distribution path. It is proposed that this functionality will be achieved in modified Satellite Broadband Access Server (SatBAS) that will seamlessly sit between the Dial IP LAC/NAS and the LNS/HG associated with the information provider. It is proposed that the downstream satellite traffic will be seamlessly broken out of the standard bidirectional tunnel by the manipulation of proprietary and standard tunnelling protocols (L2TP, L2F), point to point protocols (PPPoA, PPP, PPTP, ATMP) and additional IP/UDP routing protocols as required. It is envisaged that these designated Satellite Broadband Access Servers (SatBAS) will be generally collocated with their respective IP/DVB Gateway and satellite uplink stations.

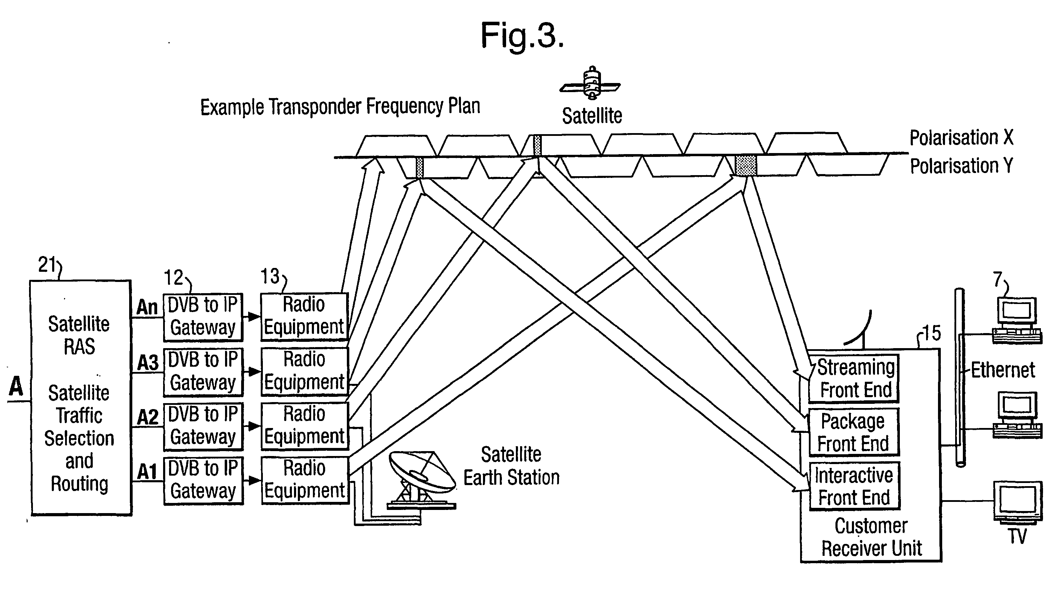

A modification (which can be applied to the system of Figure 1, or to that of Figure 2) now to be described concerns the allocation of transmission resource in the hub stations 13 and satellites 14, and receiver functionality in the customer premise satellite receiver 15, to enable a wide range of services to be carried simultaneously while making most efficient use of transmission resource. It involves the use of separate satellite transponders for distinct types of traffic, for example broadcast streaming such as TV and radio channels; broadcast files such as software packages, data packages or video programmes; and interactive traffic such as internet browsing, remote access, and game-playing. Figure 3 illustrates the corresponding allocation of transponder capacity and customer premise receiver functionality.

Here, the idea is that, in a given geostationary orbit location, separate transponders are allocated to traffic with particular characteristics. The objective is to require the minimum degree of repetition or duplication of traffic carried in the satellite, by providing sufficient individual receiver modules in the user terminal 7 to allow several distinct services to run concurrently. For example, provision of two receiver modules allows reception of a broadcast stream from one transponder while simultaneously using interactive individual browsing via another transponder. A third module will also allow, for example, regular web page caching or video programme download to occur to a given schedule without affecting the other applications. Additional modules can be provided for additional simultaneous services. Thus, Figure 3 shows the duplication of units 12, 13 and 15 for each distinct path A1, A2, etc. The actual allocation of the data among the alternative paths A1, A2, ..., B can be performed by the router 3 or server 21 in the same manner as described above for selection between the two paths *A* and *B.*

It should furthermore be noted that the arrangements shown in Figure 3 could, if desired, be used in a satellite-only system, without the dual satellite/terrestrial service discussed earlier. In this case, Figure 3 would be combined with Figure 1 (or 2), with upstream communication via the satellite and with the path B (that is to say, items 4, 5, 6, 8, 9, 10) omitted.

It will be seen that the systems described alleviate some of the limitations which can render conventional systems uneconomic for the mass markets, for example their inability to carry individual and broadcast traffic to a user simultaneously, and the diverse means of connecting the information providers network server to the distribution network.

## Claims

1. A telecommunications access system comprising:
an interface (1) to a telecommunications network;
a branch device (21);
first transmission means for conveying data in both directions between the interface and the branch device;
second transmission means (B) for conveying data in both directions between the branch device and a user terminal (7); and
third transmission means (A) for conveying data from the branch device to the user terminal;
**characterised in that** the branch device (21) is arranged in operation to examine items of data received from the interface and, selectively in dependence on information contained in an item of data, to route it via the second or via the third transmission means; and that the third transmission means (B) has a higher capacity than the second transmission means (A) and is arranged to deliver data to the premises at which the user terminal is located over a path (14) arriving at the said premises independently of a path employed by the second transmission means (B).

2. A telecommunications access system according to claim 1 in which the second transmission means (B) is a terrestrial telecommunications link.

3. A telecommunications access system according to claim 1 or 2 in which the second transmission means (B) is a terrestrial telecommunications network including cables.

4. A telecommunications access system according to any one of the preceding claims, in which the third transmission means (A) includes a radio transmitter (13) and radio receiver (15).

5. A telecommunications access system according to claim 4, in which the third transmission means (A) is a satellite link

6. A telecommunications access system according to any one of the preceding claims, including a plurality of third transmission means (A), in which the branch device (21) is operable selectively, in dependence on information contained in an item of data, to route it via the second transmission means (B) or via a selected one of the third transmission means (A).

7. A telecommunications access system according to any one of the preceding claims, in which the interface (1) is operable to insert, into items of data, information indicating which of the routes represented by the second and third transmission means (B, A) the respective item is to be routed over.

8. A telecommunications access system according to claim 7, in which the inserted information indicates the second or third route in dependence on whether the item of data forms part of, respectively, a relatively small, or relatively large, body of data which is to be transmitted.

9. A telecommunications access system according to any one of the preceding claims, in which the network to which the interface (1) is connected is a packet network, and said items of data are packets.

10. A telecommunications access system according to claim 9 in which the first and second transmission means form a point-to-point link, and the branch device (21) is arranged in operation to examine packets received from the interface (1) only for the purpose of determining whether the packet is to be routed via the second transmission means (B) or the third transmission means (A).

11. A telecommunications access system according to any one of the preceding claims, in which the branch device (21) is arranged to monitor the capacity of the second and/or third transmission means (B, A) and its routing decision depends also on that capacity.

12. A telecommunications access system according to any one of the preceding claims, in which the branch device (21) is connected to a plurality of said interfaces (1), which interface to the network.

13. A telecommunications access system according to any one of claims 1 to 11, in which the first transmission means is a telecommunications network connecting the branch device (21) to a plurality of said interfaces (1).

14. A telecommunications access system according to claim 13, in which the first transmission means is also connected to fourth transmission means for conveying data to and from further user terminals, without branching.

## Patentansprüche

1. Telekommunikationszugangssystem mit:
einer Schnittstelle (1) zu einem Telekommunikationsnetzwerk;
einer Verzweigungseinrichtung (21);
einer ersten Übertragungseinrichtung zum Übertragen in beide Richtungen zwischen der Schnittstelle und der Verzweigungseinrichtung;
einer zweiten Übertragungseinrichtung (B) zum Übertragen von Daten in beide Richtungen zwischen der Verzweigungseinrichtung und einem Benutzerendgerät (7); und
einer dritten Übertragungseinrichtung (A) zur Übertragung von Daten von der Verzweigungseinrichtung zu dem Benutzerendgerät;
**dadurch gekennzeichnet, dass** die Verzweigungseinrichtung (21) dazu eingerichtet ist, bei der Verwendung Teile von Daten zu untersuchen, die von der Schnittstelle empfangen werden, und sie selektiv in Abhängigkeit von Informationen, die in einem Teil der Daten enthalten sind, über die zweite oder über die dritte Übertragungseinrichtung zu lenken; und dass die dritte Übertragungseinrichtung (B) eine höhere Leistungsfähigkeit als die zweite Übertragungseinrichtung (B) hat, und dazu eingerichtet ist, Daten zu den Räumlichkeiten, in denen sich das Benutzerendgerät befindet, über einen Pfad (14) zu liefern, der unabhängig von einem Pfad, der von der zweiten Übertragungseinrichtung (B) verwendet wird, in den Räumlichkeiten ankommt.

2. Telekommunikationszugangssystem nach Anspruch 1, in dem die zweite Übertragungseinrichtung (B) eine terrestrische Kommunikationsverbindung ist.

3. Telekommunikationszugangssystem nach Anspruch 1 oder 2, in dem die zweite Übertragungseinrichtung (B) ein terrestrisches Telekommunikationsnetz mit Kabeln ist.

4. Telekommunikationszugangssystem nach einem der vorangehenden Ansprüche, in dem die dritte Übertragungseinrichtung (A) einen Funksender (13) und einen Funkempfänger (15) enthält.

5. Telekommunikationszugangssystem nach einem der vorangehenden Ansprüche, in dem die dritte Übertragungseinrichtung (A) eine Satellitenverbindung ist.

6. Telekommunikationszugangssystem nach einem der vorangehenden Ansprüche, das mehrere dritte Übertragungseinrichtungen (A) enthält, und in dem die Verzweigungseinrichtung (21) in Abhängigkeit von Informationen, die in einem Teil von Daten enthalten sind, selektiv betrieben werden kann, um sie über die zweite Übertragungseinrichtung (B) oder über eine ausgewählte der dritten Übertragungseinrichtungen (A) zu lenken.

7. Telekommunikationszugangssystem nach einem der vorangehenden Ansprüche, in dem die Schnittstelle (1) betrieben werden kann, in Teile von Daten Informationen einzufügen, die anzeigen, über welchen der Leitwege, die von den zweiten und dritten Übertragungseinrichtungen (B, A) dargestellt werden, der jeweilige Teil geleitet werden soll.

8. Telekommunikationszugangssystem nach Anspruch 7, in dem die eingefügten Informationen den zweiten oder dritten Leitweg in Abhängigkeit davon anzeigen, ob der Teil der Daten jeweils einen Teil eines relativ kleinen oder relativ großen Datenkörpers bildet, der übertragen werden soll.

9. Telekommunikationszugangssystem nach einem der vorangehenden Ansprüche, in dem das Netz, mit dem die Schnittstelle (1) verbunden ist, ein Paketnetz ist, und die Teile von Daten Pakete sind.

10. Telekommunikationszugangssystem nach Anspruch 9, in dem die erste und die zweite Übertragungseinrichtung eine Punkt-zu-Punkt-Verbindung bilden, und die Verzweigungseinrichtung (21) dazu eingerichtet ist, bei der Verwendung Pakete zu untersuchen, die von der Schnittstelle (1) empfangen werden, nur für den Zweck, festzustellen, ob das Paket über die zweite Übertragungseinrichtung (B) oder die dritte Übertragungseinrichtung (A) gelenkt werden soll.

11. Telekommunikationszugangssystem nach einem der vorangehenden Ansprüche, in dem die Verzweigungseinrichtung (21) dazu eingerichtet ist, die Leistungsfähigkeit der zweiten und/ oder dritten Übertragungseinrichtung (B, A) zu überwachen und ihre Entscheidung bezüglich der Lenkung auch von dieser Leistungsfähigkeit abhängt.

12. Telekommunikationszugangssystem nach einem der vorangehenden Ansprüche, in dem die Verzweigungseinrichtung (21) mit mehreren Schnittstellen (1) verbunden ist, die eine Schnittstelle zu dem Netz bilden.

13. Telekommunikationszugangssystem nach einem der Ansprüche 1 bis 11, bei dem die erste Übertragungseinrichtung ein Telekommunikationsnetz ist, das die Verzweigungseinrichtung (21) mit mehreren Schnittstellen (1) verbindet.

14. Telekommunikationszugangssystem nach Anspruch 13, bei dem die erste Übertragungseinrichtung auch mit einer vierten Übertragungseinrichtung verbunden ist, um die Daten zu und von weiteren Benutzerendgeräten ohne Verzweigung zu übertragen.

## Revendications

1. Système d'accès de télécommunication comprenant :
une interface (1) avec un réseau de télécommunication,
un dispositif de branchement (21),
un premier moyen de transmission destiné à véhiculer des données dans les deux sens entre l'interface et le dispositif de branchement,
un deuxième moyen de transmission (B) destiné à véhiculer des données dans les deux sens entre le dispositif de branchement et un terminal d'utilisateur (7), et
un troisième moyen de transmission (A) destiné à véhiculer des données depuis le dispositif de branchement vers le terminal d'utilisateur,
**caractérisé en ce que** le dispositif de branchement (21) est agencé en fonctionnement pour examiner des éléments de données reçus depuis l'interface et, sélectivement en fonction d'informations contenues dans un élément de données, pour les acheminer par l'intermédiaire du deuxième ou par l'intermédiaire du troisième moyen de transmission, et **en ce que** le troisième moyen de transmission (B) a une plus grande capacité que le deuxième moyen de transmission (A) et est agencé pour délivrer des données, au niveau des locaux où se trouve le terminal d'utilisateur, sur une voie (14) arrivant au niveau desdits locaux indépendamment d'une voie employée par le deuxième moyen de transmission (B).

2. Système d'accès de télécommunication selon la revendication 1, dans lequel le deuxième moyen de transmission (B) est une liaison de télécommunication terrestre.

3. Système d'accès de télécommunication selon la revendication 1 ou 2, dans lequel le deuxième moyen de transmission (B) est un réseau de télécommunication terrestre comprenant des câbles.

4. Système d'accès de télécommunication selon l'une quelconque des revendications précédentes, dans lequel le troisième moyen de transmission (A) comprend un émetteur radio (13) et un récepteur radio (15).

5. Système d'accès de télécommunication selon la revendication 4, dans lequel le troisième moyen de transmission (A) est une liaison satellite.

6. Système d'accès de télécommunication selon l'une quelconque des revendications précédentes, comprenant une pluralité de troisièmes moyens de transmission (A), dans lequel le dispositif de branchement (21) peut être mis en oeuvre sélectivement en fonction d'informations contenues dans un élément de données, pour les acheminer par l'intermédiaire du deuxième moyen de transmission (B) ou par l'intermédiaire d'un moyen sélectionné parmi les troisièmes moyens de transmission (A).

7. Système d'accès de télécommunication selon l'une quelconque des revendications précédentes, dans lesquelles l'interface (1) peut être mise en oeuvre pour incorporer, dans des éléments de données, des informations indiquant sur quel itinéraire, parmi les itinéraires représentés par les deuxième et troisième moyens de transmission (B, A), l'élément respectif doit être acheminé.

8. Système d'accès de télécommunication selon la revendication 7, dans lequel les informations incorporées indiquent le deuxième ou le troisième itinéraire selon que l'élément de données fait partie, respectivement, d'un corps de données relativement petit ou relativement grand à transmettre.

9. Système d'accès de télécommunication selon l'une quelconque des revendications précédentes, dans lequel le réseau auquel l'interface (1) est connectée est un réseau par paquets et lesdits éléments de données sont des paquets.

10. Système d'accès de télécommunication selon la revendication 9, dans lequel les premier et deuxième moyens de transmission forment une liaison point à point, et le dispositif de branchement (21) est agencé en fonctionnement pour examiner des paquets reçus depuis l'interface (1) uniquement dans le but de déterminer si le paquet doit être acheminé par l'intermédiaire du deuxième moyen de transmission (B) ou du troisième moyen de transmission (A).

11. Système d'accès de télécommunication selon l'une quelconque des revendications précédentes, dans lequel le dispositif de branchement (21) est agencé pour surveiller la capacité du deuxième moyen et/ou du troisième moyen de transmission (B, A), et la décision de routage dépend également de cette capacité.

12. Système d'accès de télécommunication selon l'une quelconque des revendications précédentes, dans lequel le dispositif de branchement (21) est connecté à une pluralité desdites interfaces (1) ce qui réalise une interface avec le réseau.

13. Système d'accès de télécommunication selon l'une quelconque des revendications 1 à 11, dans lequel le premier moyen de transmission est un réseau de télécommunications qui relie le dispositif de branchement (21) à une pluralité desdites interfaces (1).

14. Système d'accès de télécommunication selon la revendication 13, dans lequel le premier moyen de transmission est également connecté à un quatrième moyen de transmission afin de véhiculer des données vers et depuis d'autres terminaux d'utilisateurs sans branchement.
